# EUROPEAN PATENT APPLICATION

(11) **EP 3 916 123 A1**
(43) Date of publication of application: **01.12.2021**
(21) Application number: 20177412.2
(22) Date of filing: 29.05.2020
(51) Int. Cl.: C23C 18/16, C23C 18/32, C25B 1/00

(54) **ACTIVE ELEMENT, PROCESS FOR MAKING THE SAME, AND ELECTROCHEMICAL APPARATUS**

(71) Applicant: 2706649 Ontario Ltd, Aurora, Ontario L4G 6W2 (CA)
(72) Inventor: Maguire, Debbie, Evansville, IN, 47713 (US); Fertman, Mark, Aurora (CA)
(74) Representative: Heinze, Ekkehard

(57) **Abstract**

The present invention relates to an active element of an electrochemical apparatus for producing electrical power and/or hydrogen, the active element being formed as a massive metal body or a mesh-type or perforated sheet-type support structure made from at least one of magnesium, zinc, aluminum, manganese, ferrum, or titanium, or an alloy of at least one of these, and comprising a coating of boron enhanced carbon/graphite/graphene or a boron enhanced material which comprises at least two elements selected from the group comprising carbon/graphite/graphene, nickel, tungsten, phosphorous, and copper.

## Description

The present invention relates to an active element of an electrochemical apparatus for producing electrical power and/or hydrogen, the active element being formed as a massive metal body or a mesh-type or perforated sheet-type support structure made from at least one of magnesium, zinc, aluminum, manganese, ferrum, or titanium, or an alloy of at least one of these, and comprising an active surface layer. It further relates to a process for making such active element and to an electrochemical apparatus comprising such active element.

The function and efficiency of electrochemical apparatus, including electrical power generating apparatus and hydrogen generating apparatus, can be considerably improved by appropriate materials for the major components thereof, in particular components which are crucial for the electrochemical processes in the apparatus and which herein below are referred to as "active elements". These are, in particular, a node or cathode elements of an electrochemical battery or catalyzer elements or hydrogen-developing elements in hydrogen generating apparatus.

Developing and using materials, in particular surface materials, of superior efficiency in such apparatus can result in highly improved efficiency thereof and may open new applications and vastly broader markets for such apparatus.

Improvements in this regard are disclosed in the non-published European Patent Application 19212000.4 of the applicant.

It is an object of the invention, to provide an active element of the above-referenced type which is highly efficient both under cost and performance aspects, and a process for making the same. Furthermore, an electrochemical apparatus comprising such improved active elements shall be provided.

This object is solved, in its device aspect, by an active element of claim 1 and, in its process aspect, by a process of claim 10.

According to a first aspect of the invention, the active element comprises a coating of boron enhanced carbon or graphite or graphene, respectively. According to a second aspect of the invention, the active element comprises a surface layer of a boron enhanced material which comprises at least two elements selected from the group comprising carbon or graphite or graphene, respectively, nickel, tungsten, phosphorous, and copper.

Where in the following "carbon or graphite or graphene" or "carbon/graphite/ graphene" are mentioned, it shall be clear that the chemical element in the coating is carbon and that it can exist in several modifications, in particular those which are known as graphite or graphene. Mixed morphological/structural configurations can also be advantageous, e.g. carbon nanoparticles mixed with graphite and/or graphene. It should also be noted that such modifications of carbon can be available as commercial products or can be formed in the course of the depositing of the coating in an electroless bath. By means of an appropriate adjustment of the deposition parameters, the existence and ratio of such modifications/configurations can be controlled in line with the required parameters of the active element.

In preferable embodiments, the carbon/graphite constituent of the coating comprises carbon nanoparticles or nanotubes. Such embodiments provide for a very large active surface area, which further improves the electrochemical efficiency of the active element.

In an embodiment of the invention, the massive body or support structure comprises a ferrous or titanium based alloy and a coating of electroless nickel co-deposited with boron and at least one of tungsten and carbon/graphite/ graphene. Such active element is suitable to form an anode element of an electrochemical battery or a hydrogen-developing element of a hydrogen generating apparatus with superior respective electrochemical efficiency.

In a further embodiment of the invention, the massive body or support structure comprises aluminum and a coating of boron enhanced graphite or of electroless nickel co-deposited with boron and at least one of phosphorous, tungsten, carbon/graphite/graphene and copper. Such active element is suitable to form a cathode element of an electrochemical battery or a catalyzer element of a hydrogen generating apparatus with less production cost and superior respective electrochemical efficiency.

Aluminum, in particular, has turned out as a good basic material for active elements, due to its low price and superior workability, in particular for foil-type support structures which can be used in small-size electrochemical batteries.

In an exemplary embodiment, the coating of the active element is primarily nickel, with between 3 and 6 wt.-% tungsten, 1 and 3 wt.-% boron, 3 and 5 wt.-% phosphorous, 0.5 to 1 wt.-% copper, 0.05 to 0.20 wt.-% carbon nanoparticles and 0.1 to 1 wt.-% graphite. Depending on the specific application, the percentage values of the several elements can vary, and the content of some of the elements can be approximately zero.

In another exemplary embodiment, according to the above-referenced first aspect of the invention, the coating is primarily carbon or graphite or graphene, respectively, comprising between 1.5 wt.-% and 20 wt.-%, preferably between 2 wt.-% and 10 wt.-%, of boron.

In further embodiments, the coating is an electroless deposited coating which has a medium thickness between 20 µm and 500 µm, preferably between 50 µm and 200 µm. According to the peculiarities of specific applications, different values can be appropriate.

In further embodiments, the coating comprises a nano- or microporous surface having a surface roughness in the range between 50 nm and 100 µm, preferably between 100 nm and 50 µm and more preferably between 500 nm and 5 µm. The specific surface roughness can be adapted to the respective application and geometric configuration of an electrochemical apparatus, wherein the active element is being used.

In further embodiments, the massive body or support structure comprises an overall flat, cylindrical or spiral plate shape. The term "plate shape" includes mesh-type or grid-type support structures and foils. Other geometrical configurations, e.g. small balls arranged in a grid or mesh-type holder, or appropriately supported filaments, can be useful embodiments in specific fields and for specific purposes.

The inventive deposition of the coating from an electroless bath, in particular nickel-based bath, facilitates the production of active elements with precisely predetermined surface morphology, superior electrochemical performance and long lifetime, due to the excellent adherence of the coating to the surface of the metal body or support structure, respectively.

In a preferred embodiment, the electrochemical apparatus comprising at least one active element according to the present invention is an electrical battery. Such battery can, in particular, comprise an aluminum or magnesium or manganese based active element as an anode element. Also, it can comprise a ferrum- or titanium based active element as a cathode element.

In further embodiments, such electrochemical apparatus (in particular battery) comprises an alkaline or saline aqueous electrolyte, in particular comprising potassium hydroxide or potassium chloride or a manganese compound. More specifically, in a cost efficient embodiment which provides a high performance in generating electrical power, the active element comprises aluminum and the aqueous electrolyte comprises potassium hydroxide or potassium chloride.

The above embodiments and aspects of the invention are not determined to restrict the scope of the appending claims but to illustrate preferred configurations and applications of the invention. In particular, any combinations of the features of the claims and of the above-mentioned embodiments and aspects, which are within the skills of one of ordinary skill in the art, shall be considered as being with the scope of the invention.

## Claims

1. Active element of an electrochemical apparatus for producing electrical power and/or hydrogen, the active element being formed as a massive metal body or a mesh-type or perforated sheet-type support structure made from at least one of magnesium, zinc, aluminum, manganese, ferrum, or titanium, or an alloy of at least one of these, and comprising a coating of boron enhanced carbon/graphite/graphene or a boron enhanced material which comprises at least two elements selected from the group comprising carbon/graphite/ graphene, nickel, tungsten, phosphorous, and copper.

2. Active element of claim 1, wherein the massive body or support structure comprises a ferrous or titanium based alloy and a coating of electroless nickel co-deposited with boron and at least one of tungsten and carbon/graphite.

3. Active element of claim 1, wherein the massive body or support structure comprises aluminum and a coating of electroless nickel co-deposited with boron and at least one of phosphorous, tungsten, carbon/graphite/graphene and copper.

4. Active element of claim 1, wherein the massive body or support structure comprises aluminum and a coating which primarily contains carbon/graphite/ graphene and between 1.5 wt.-% and 20 wt.-%, preferably between 2 wt.-% and 10 wt.-%, boron.

5. Active element of one of the preceding claims, wherein the carbon/graphite/ graphene constituent of the coating comprises carbon nanoparticles or nanotubes.

6. Active element of one of the preceding claims, wherein the coating has a medium thickness between 20 µm and 500 µm, preferably between 50 µm and 200 µm.

7. Active element of one of claims 1 to 3 or 5, wherein the coating is primarily nickel, with between 3 and 6 wt.-% tungsten, 1 and 3 wt.-% boron, 3 and 5 wt.-% phosphorous, 0.5 to 1 wt.-% copper, 0.05 to 0.20 wt.-% carbon nanoparticles and 0.1 to 1 wt.-% graphite.

8. Active element of one of the preceding claims, wherein the coating comprises a nano- or microporous surface having a surface roughness in the range between 50 nm and 100 µm, preferably between 100 nm and 50 µm and more preferably between 500 nm and 5 µm.

9. Active element of one of the preceding claims, wherein the massive body or support structure comprises an overall flat, cylindrical or spiral plate shape.

10. Process for making an active element of one of the preceding claims, wherein the massive body or support structure is being immersed into an electroless poly-metallic bath comprising a nickel cation source, boron and at least one additional element selected from tungsten, carbon/graphite, phosphorous, and copper.

11. Electrochemical apparatus producing electrical power and/or hydrogen, comprising at least one active element of one of claims 1 to 9.

12. Electrochemical apparatus of claim 11, adapted for producing electrical power and comprising an aluminum or magnesium or manganese based active element of one of claims 1 to 9 as an anode element.

13. Electrochemical apparatus of claim 11, adapted for producing electrical power and comprising a ferrous or titanium based active element of one of claims 1 to 9 as a cathode element.

14. Electrochemical apparatus of one of claims 11 to 13, comprising an alkaline or saline aqueous electrolyte, in particular comprising potassium hydroxide or potassium chloride or a manganese compound.

15. Electrochemical apparatus of claim 14, wherein the active element comprises aluminum and the aqueous electrolyte comprises potassium hydroxide or potassium chloride.
